# EUROPEAN PATENT APPLICATION

(11) **EP 3 530 430 A1**
(43) Date of publication of application: **28.08.2019**
(21) Application number: 17862119.9
(22) Date of filing: 12.10.2017
(51) Int. Cl.: B29C 49/12, B29C 49/06, B29C 49/78

(54) **BLOW MOLDING DEVICE AND METHOD FOR MANUFACTURING SYNTHETIC RESIN CONTAINER USING SAME**

(30) Priority: 18.10.2016 JP 2016204396
(71) Applicant: Toyo Seikan Co., Ltd., Tokyo 141-8640 (JP)
(72) Inventor: MONZEN, Hideto, Yokohama-shi Kanagawa 230-0001 (JP); OSHIO, Toshiaki, Yokohama-shi Kanagawa 230-0001 (JP); FUJIOKA, Masashi, Yokohama-shi Kanagawa 230-0001 (JP); KOISHI, Ryousuke, Kuki-shi Saitama 346-0028 (JP); KOBAYASHI, Hiroyuki, Yokohama-shi Kanagawa 230-0001 (JP); KAWAGUCHI, Keisuke, Yokohama-shi Kanagawa 230-0001 (JP)
(74) Representative: Liebetanz, Michael
(86) International application number: PCT/JP2017/036975
(87) International publication number: WO 2018/074315

(57) **Abstract**

When a synthetic resin container is blow molded by using a blow molding device including an elevatable bottom mold 3, deviation of the stretching direction of a preform P from the axial direction is suppressed while avoiding interference between the bottom mold 3 and a stretch rod 4, by controlling the movement of the stretch rod 4 such that when the downwardly moving stretch rod 4 reaches a bottommost point while stretching the preform P, the stretch rod 4 stops at a position avoiding interference with the bottom mold 3 in a second blow molding position, and controlling the movement of the push rod 5 such that the push rod 5 protruding from the bottom mold 3 moves downward and retracts into the bottom mold 3 while supporting the stretching preform P separated from the stopped stretch rod 4.

## Description

### FIELD

The invention relates to a blow molding device including an elevatable bottom mold, and a method for manufacturing a synthetic resin container using the blow molding device.

### BACKGROUND

Conventionally, a synthetic resin container formed by producing a bottomed tubular preform from a thermoplastic resin such as polyethylene terephthalate and then molding the preform into a bottle shape by biaxial stretch-blow molding, for example, has been used as a container for various beverages, various seasonings, and the like in a wide range of fields.

Attempts have been made to form this type of synthetic resin container as thin as possible, so that weight can be reduced and the required amount of resin can be reduced to cut down on costs. For example, Patent Literature 1 proposes a method for manufacturing a synthetic-resin-made bottle using a blow molding device including an elevatable bottom mold, in which a preform is stretched while a bottom mold is lowered, and then a bottom-push up step of pushing up the bottom side of the stretched preform by elevating the bottom mold is performed to form the final shape. According to such a method, the container can be formed thinner, and the bottom of the container can absorb pressure reduction.

Patent Literature 1: Japanese Patent Laid-Open No. 2008-254244

### SUMMARY

### TECHNICAL PROBLEM

When a preform is molded into a predetermined container shape by blow molding, the preform is normally stretched in the axial direction by a stretch rod. At this time, to prevent deviation of the stretching direction of the preform from the axial direction, the preform needs to be supported by a stretch rod while stretching, until the preform is immediately in front of the bottom mold (see Figure 3(a) of Patent Literature 1). Accordingly, when the bottom mold is elevated, the stretch rod needs to be elevated together with the bottom mold. If the bottom mold and the stretch rod interfere with each other at this time, the bottom of the molded container may be scratched, or the mold member may be damaged.

The invention has been made in view of the foregoing circumstances, and aims to provide a blow molding device and a method for manufacturing a synthetic resin container using the blow molding device, the blow molding device capable of suppressing deviation of the stretching direction of a preform from the axial direction while avoiding interference between a bottom mold and a stretch rod when a synthetic resin container is blow molded by use of the blow molding device including an elevatable bottom mold.

### SOLUTION TO PROBLEM

The blow molding device of the invention is a blow molding device that molds a bottomed tubular preform into a predetermined container shape by blow molding, the blow molding device including: a body mold formed of an openable split mold; a bottom mold incorporated on the bottom side of the body mold to be elevatable between a first blow molding position and a second blow molding position; a stretch rod configured to stretch the preform in the axial direction; and a push rod installed in a center part of the bottom mold on the same axis as the stretch rod and vertically movable in the axial direction, in which: the movement of the stretch rod is controlled such that when the downwardly moving stretch rod reaches a bottommost point while stretching the preform, the stretch rod stops at a position avoiding interference with the bottom mold in the second blow molding position; and the movement of the push rod is controlled such that the push rod protruding from the bottom mold moves downward and retracts into the bottom mold while supporting the stretching preform separated from the stopped stretch rod.

A method for manufacturing a synthetic resin container of the invention is a method for manufacturing a synthetic resin container using the above blow molding device, the method including the steps of: when blow molding is performed on the preform set in the blow molding device in which the body mold is closed with the bottom mold lowered to the first blow molding position, further stretching, while supporting with the push rod, the stretching preform separated from the stretch rod stopped at a bottommost point; and when the bottom side of the stretched preform reaches the bottom mold in the first blow molding position, elevating the bottom mold to the second blow molding position to push back and invert the bottom side of the stretched preform, thereby forming the stretched preform according to an inner shape of the body mold and the bottom mold and molding the preform into a predetermined container shape.

### ADVANTAGEOUS EFFECTS OF INVENTION

According to the invention, by stopping the stretch rod in a position avoiding interference with the bottom mold, interference between the bottom mold and the stretch rod can be avoided. Moreover, by supporting the stretching preform separated from the stopped stretch rod by the push rod, deviation of the stretching direction of the preform from the axial direction can be suppressed.

### BRIEF DESCRIPTION OF THE DRAWINGS

Figure 1 is an explanatory view showing an outline of a blow molding device of an embodiment of the invention.
Figure 2 is an explanatory view showing a manufacturing process of a method for manufacturing a synthetic resin container of the embodiment of the invention.
Figure 3 is an explanatory view showing a manufacturing process of the method for manufacturing a synthetic resin container of the embodiment of the invention.
Figure 4 is an explanatory view showing a manufacturing process of the method for manufacturing a synthetic resin container of the embodiment of the invention.
Figure 5 is an explanatory view showing a manufacturing process of a modification of the method for manufacturing a synthetic resin container of the embodiment of the invention.

### DETAILED DESCRIPTION

Hereinbelow, a preferred embodiment of the invention will be described with reference to the drawings.

### [Blow molding device]

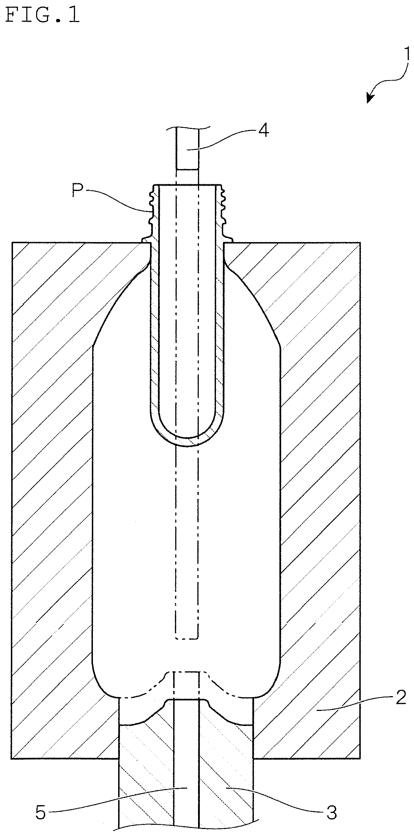

Figure 1 shows an outline of a blow molding device of the invention as one embodiment. A blow molding device 1 shown in Figure 1 is intended to mold a bottomed tubular preform P into a predetermined container shape by blow molding. The blow molding device 1 includes a body mold 2 formed of an openable split mold, a bottom mold 3 incorporated on the bottom side of the body mold 2 to be elevatable between a first blow molding position and a second blow molding position, a stretch rod 4 that stretches the preform P in the axial direction, and a push rod 5 installed in a center part of the bottom mold 3 on the same axis as the stretch rod 4 and vertically movable in the axial direction.

Note that in Figure 1, a state where the bottom mold 3 is elevated to the second blow molding position is indicated by a chain double-dashed line.

The stretch rod 4 included in the blow molding device 1 is configured to be vertically movable in the axial direction by an unillustrated drive unit. The movement of the stretch rod 4 is controlled such that when the downwardly moving stretch rod 4 reaches a bottommost point while stretching the preform P, the stretch rod 4 stops at a position avoiding interference with the bottom mold 3 in the second blow molding position as indicated by the chain double-dashed line in Figure 1. In other words, the movement of the stretch rod 4 is controlled such that the stretch rod 4 is positioned above the bottom mold 3 and does not interfere with the bottom mold 3 when the bottom mold 3 is elevated to the second blow molding position.

The push rod 5 included in the blow molding device 1 is configured to be vertically movable on the same axis as the stretch rod 4 by an unillustrated drive unit. The movement of the push rod 5 is controlled such that the push rod 5 protruding from the bottom mold 3 moves downward and retracts into the bottom mold 3 while supporting the stretching preform P separated from the stopped stretch rod 4.

The upper and lower, right and left, and horizontal and vertical directions of the blow molding device 1 defined herein are directions defined in the state shown in Figure 1 where the bottom mold 3 side is the lower side.

### [Method for manufacturing synthetic resin container]

A method for manufacturing a synthetic resin container of the invention can be carried out appropriately by using the blow molding device 1 described above. As one embodiment of the method, an example of producing a synthetic resin container by using the blow molding device 1 will be described while giving further detail on the blow molding device 1.

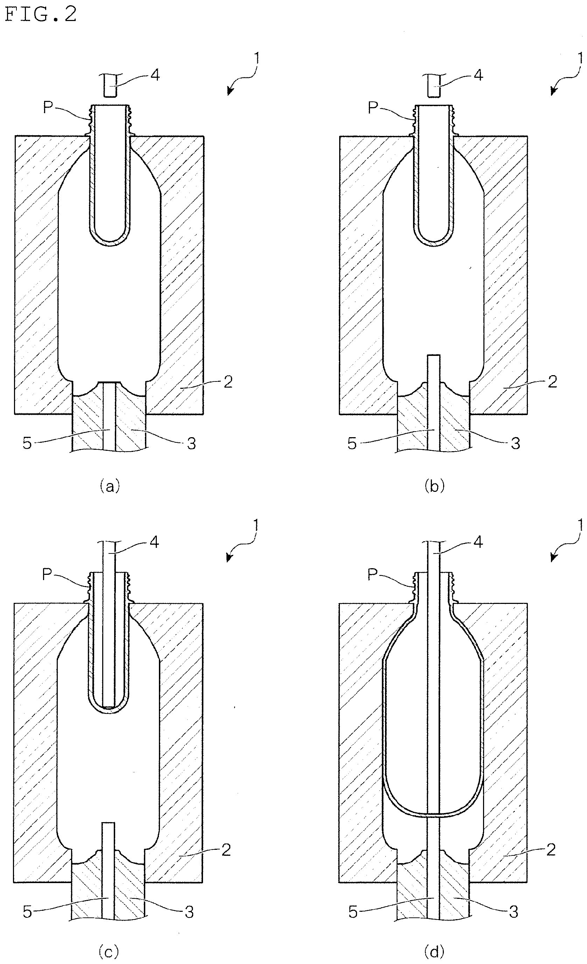

In the embodiment, first, as shown in Figure 2 (a), while the bottom mold 3 is lowered to the first blow molding position, the body mold 2 is closed, and the heated and softened preform P ready to be blow molded is set in the blow molding device 1.

The preform P is made of thermoplastic resin, and is molded into the bottomed tubular shape in Figure 2 (a) by injection molding or compression molding, for example. In the example of Figure 2 (a), the vicinity of an opening of the preform P is formed so as to serve as a mouth part of the container as it is. Examples of the thermoplastic resin include thermoplastic polyester such as polyethylene terephthalate, polybutylene terephthalate, polyethylene naphthalate, polylactic acid, and a copolymer of these substances, and a mixture of these resins or a mixture with other resins. While ethylene terephthalate-based thermoplastic polyester such as polyethylene terephthalate is particularly preferable, the embodiment is not limited thereto.

After the preform P is set in the blow molding device 1, the push rod 5 is moved upward and protruded from the bottom mold 3 (see Figure 2 (b)). At this time, the protrusion length of the push rod 5 may be set appropriately depending on the stop position of the stretch rod 4.

As described earlier, the movement of the stretch rod 4 is controlled such that the stretch rod 4 stops at a bottommost point which is a position where interference with the bottom mold 3 in the second blow molding position is avoided. When the push rod 5 is protruded from the bottom mold 3, in the embodiment, the push rod 5 is controlled to wait while protruding by a predetermined protrusion length from the bottom mold 3, so that the tip end of the push rod 5 comes close to the tip end of the stretch rod 4 when the stretch rod 4 stops at the bottommost point.

Then, concurrently with or before or after an upward movement of the push rod 5, the stretch rod 4 is moved downward and blow molding is started by blowing air into the preform P from an unillustrated blow air supply unit. Thus, the preform P is stretched not only in the axial direction (vertical direction) by the stretch rod 4, but also in the circumferential direction (lateral direction) by blow air (see Figure 2 (c) and (d)).

During this period, the preform P can be stretched uniformly by appropriately adjusting the lowering speed of the stretch rod 4 and the blow air pressure. Moreover, although the preform P stretching while being supported by the stretch rod 4 can stretch without its stretching direction deviating from the axial direction, when the stretch rod 4 stops at the bottommost point, the stretching preform P loses the support by the stretch rod 4. If the stretching preform P having lost the support by the stretch rod 4 is further stretched in this state, the stretching direction of preform P may deviate from the axial direction. Deviation of the stretching direction from the axial direction causing the center of bottom of the preform P to stretch toward a position other than the center of the bottom mold 3 is undesirable from the viewpoint of uniform stretching of the preform P.

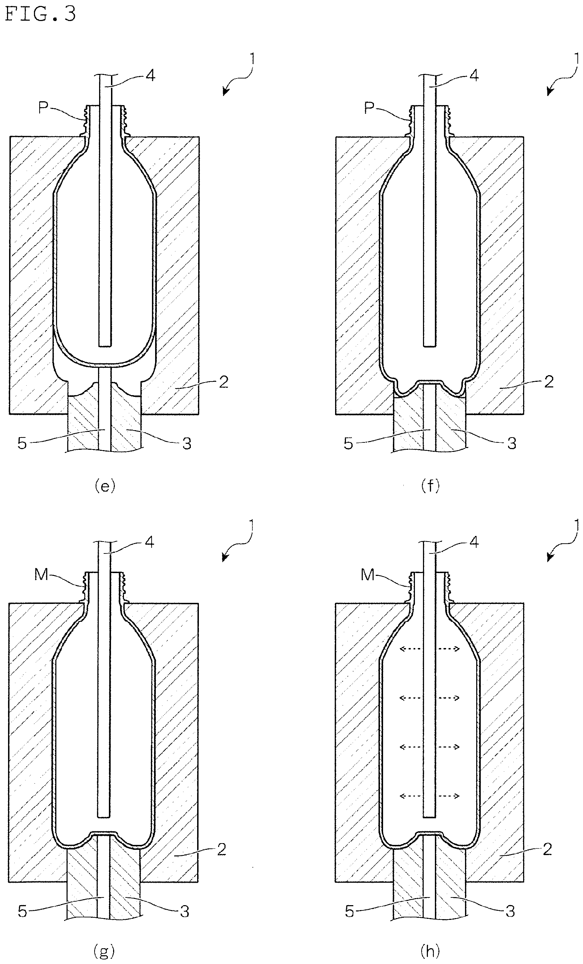

Hence, in the embodiment, the push rod 5 is controlled to wait while protruding by a predetermined protrusion length from the bottom mold 3, so that the push rod 5 can receive the stretching preform P having lost the support by the stretch rod 4. Then, the movement of the push rod 5 is controlled such that after the stop of the stretch rod 4, the push rod 5 moves downward and retracts into the bottom mold 3 while supporting the stretching preform P separated from the stopped stretch rod 4 (see Figure 3 (e) and (f)).

Accordingly, even after the stop of the stretch rod 4, the push rod 5 allows the stretching preform P to continue stretching until it reaches the bottom mold 3 in the first blow molding position, while suppressing deviation of the stretching direction of the stretching preform P from the axial direction.

Note that the speed of downward movement of the push rod 5 during this period is appropriately adjusted so as to push the stretching preform P without hindering the stretching thereof, as a matter of course.

When the bottom side of the stretched preform P reaches the bottom mold 3 in the first blow molding position, the bottom mold 3 is elevated to the second blow molding position by an unillustrated drive unit to push back and invert the bottom side of the stretched preform P, whereby the stretched preform P is formed according to the inner shape of the body mold 2 and the bottom mold 3, and the stretched preform P is molded into a predetermined container shape (see Figure 3 (g)). Thus, it is possible to mold a container M sufficiently stretched and thinned on the container bottom side.

During this period, the stretch rod 4 stays at a position avoiding interference with the bottom mold 3 in the second blow molding position, so that the bottom mold 3 and the stretch rod 4 do not interfere with each other. As a result, troubles such as scratches on the bottom of the molded container M and damaging of the mold member due to the interference between the bottom mold 3 and the stretch rod 4 can be avoided.

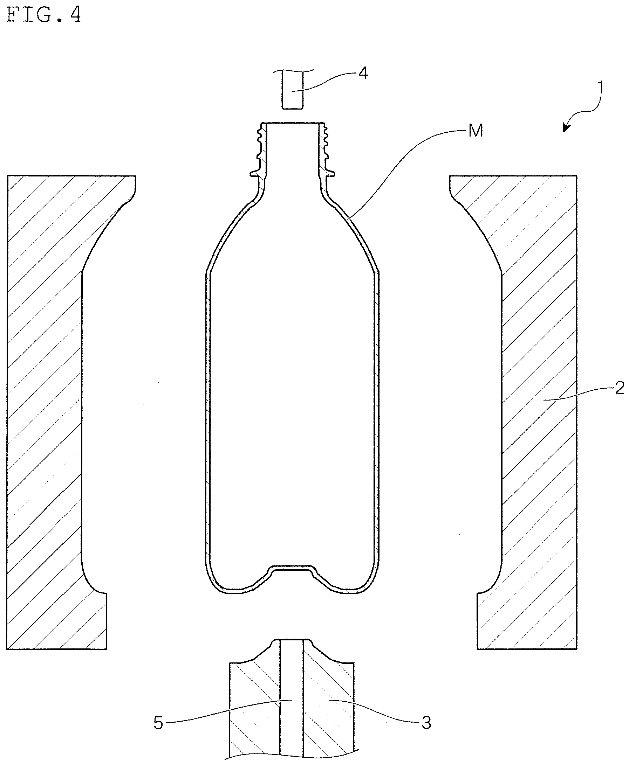

Thereafter, aftertreatment such as a cooling treatment is performed by blowing cooling air from unillustrated blowing nozzles provided in the stretch rod 4 (see Figure 3 (h)). Then, as shown in Figure 4, the stretch rod 4 is moved upward, the body mold 2 and the bottom mold 3 are opened, and the container M molded into a predetermined container shape is removed.

Note that the stop position of the stretch rod 4 is appropriately adjusted also in consideration of preventing the stretch rod 4 from hindering the cooling treatment at this time.

As has been described, according to the embodiment, the stretch rod 4 is stopped in a position avoiding interference with the bottom mold 3, so that interference between the bottom mold 3 and the stretch rod 4 can be avoided. Additionally, the movement of the push rod 5 is controlled such that after the stop of the stretch rod 4, the push rod 5 waiting while protruding by a predetermined protrusion length from the bottom mold 3 moves downward and retracts into the bottom mold 3 while supporting the stretching preform P separated from the stopped stretch rod 4. Hence, deviation of the stretching direction of the preform P from the axial direction can be suppressed. In order to more surely suppress deviation of the stretching direction of the preform P from the axial direction, the movement of the push rod 5 may be controlled in the following manner.

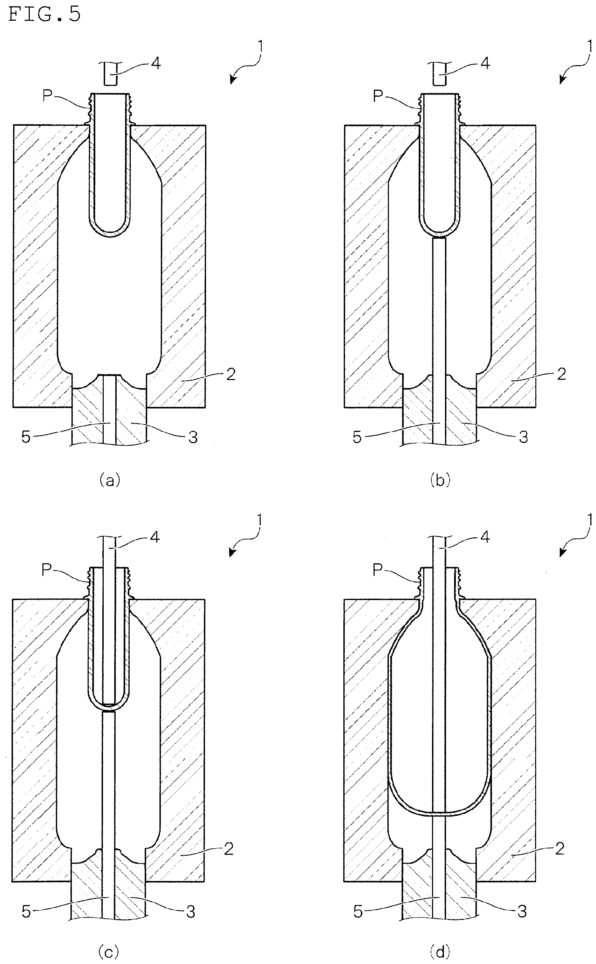

Figure 5 is an explanatory view showing a manufacturing process of a modification of the embodiment. In the modification shown in Figure 5, as in the aforementioned embodiment, after a preform P is set in a blow molding device 1 (see Figure 5 (a)), a push rod 5 is moved upward to protrude from a bottom mold 3. At this time, the push rod 5 is moved upward until the tip end of the push rod 5 comes into contact with or comes close to the bottom of the preform P (see Figure 5 (b)).

Then, concurrently with or slightly after the upward movement of the push rod 5, the stretch rod 4 is moved downward and blow molding is started by blowing air into the preform P from an unillustrated blow air supply unit. The resulting axial and circumferential stretching of the preform P is the same as the aforementioned embodiment (see Figure 5 (c) and (d)). During this period, the movement of the push rod 5 is controlled such that the push rod 5 protruding from the bottom mold 3 sandwiches the bottom side of the preform P together with the stretch rod 4, and moves downward in synchronization with the stretch rod 4. As a result, deviation of the stretching direction of the preform P from the axial direction can be suppressed more securely.

Then, the movement of the push rod 5 is controlled such that after the stop of the stretch rod 4, the push rod 5 moves downward and retracts into the bottom mold 3 while supporting the stretching preform P separated from the stopped stretch rod 4, as in the case of the aforementioned embodiment. Since the following processes can also be carried out in the same manner as in the aforementioned embodiment, redundant descriptions are omitted.

While preferred embodiments of the invention have been described, the invention is not limited only to the embodiments, and various modifications can be made within the scope of the invention, as a matter of course.

That is, the blow molding device of the invention may be configured in any way, as long as the blow molding device includes: the body mold 2 formed of an openable split mold; the bottom mold 3 incorporated on the bottom side of the body mold 2 to be elevatable between the first blow molding position and the second blow molding position; the stretch rod 4 configured to stretch the preform P in the axial direction; and the push rod 5 installed in a center part of the bottom mold 3 on the same axis as the stretch rod 4 and vertically movable in the axial direction, the movement of the stretch rod 4 being controlled such that when the downwardly moving stretch rod 4 reaches the bottommost point while stretching the preform P, the stretch rod 4 stops at a position avoiding interference with the bottom mold 3 in the second blow molding position, and the movement of the push rod 5 being controlled such that the push rod 5 protruding from the bottom mold 3 moves downward and retracts into the bottom mold 3 while supporting the stretching preform P separated from the stopped stretch rod 4. Matters other than these may be appropriately changed without being limited to the aforementioned embodiments, and matters described in the aforementioned embodiments may be appropriately selected and combined.

The method for manufacturing a synthetic resin container of the invention may include any steps, as long as the method includes the steps of: when blow molding is performed on the preform P set in the blow molding device 1 in which the body mold 2 is closed with the bottom mold 3 lowered to the first blow molding position, further stretching, while supporting with the push rod 5, the stretching preform P separated from the stretch rod 4 stopped at the bottommost point; and when the bottom side of the stretched preform P reaches the bottom mold 3 in the first blow molding position, elevating the bottom mold 3 to the second blow molding position to push back and invert the bottom side of the stretched preform P, thereby forming the stretched preform P according to an inner shape of the body mold 2 and the bottom mold 3 and molding the preform P into a predetermined container shape. Matters other than these may be appropriately changed without being limited to the aforementioned embodiments, and matters described in the aforementioned embodiments may be appropriately selected and combined.

The entire contents of the literature described in this specification and the Japanese patent application specification underlying the present Paris priority are incorporated herein.

### INDUSTRIAL APPLICABILITY

The invention may be used as a technique of manufacturing a synthetic resin container for various beverages, various seasonings, and the like.

### REFERENCE SIGNS LIST

- 1: blow molding device
- 2: body mold
- 3: bottom mold
- 4: stretch rod
- 5: push rod
- P: preform
- M: container

## Claims

1. A blow molding device that molds a bottomed tubular preform into a predetermined container shape by blow molding, the blow molding device comprising:
a body mold formed of an openable split mold;
a bottom mold incorporated on the bottom side of the body mold to be elevatable between a first blow molding position and a second blow molding position;
a stretch rod configured to stretch the preform in the axial direction; and
a push rod installed in a center part of the bottom mold on the same axis as the stretch rod and vertically movable in the axial direction, wherein:
the movement of the stretch rod is controlled such that when the downwardly moving stretch rod reaches a bottommost point while stretching the preform, the stretch rod stops at a position avoiding interference with the bottom mold in the second blow molding position; and
the movement of the push rod is controlled such that the push rod protruding from the bottom mold moves downward and retracts into the bottom mold while supporting the stretching preform separated from the stopped stretch rod.

2. The blow molding device according to claim 1, wherein
the movement of the push rod is controlled such that after the stop of the stretch rod, the push rod waiting while protruding by a predetermined protrusion length from the bottom mold moves downward and retracts into the bottom mold while supporting the stretching preform separated from the stopped stretch rod.

3. The blow molding device according to claim 1, wherein
the movement of the push rod is controlled such that the push rod protruding from the bottom mold sandwiches the bottom side of the preform together with the stretch rod and moves downward in synchronization with the stretch rod, and then after the stop of the stretch rod, the push rod moves downward and retracts into the bottom mold while supporting the stretching preform separated from the stopped stretch rod.

4. A method for manufacturing a synthetic resin container using the blow molding device according to any one of claims 1 to 3, the method comprising the steps of:
when blow molding is performed on the preform set in the blow molding device in which the body mold is closed with the bottom mold lowered to the first blow molding position,
further stretching, while supporting with the push rod, the stretching preform separated from the stretch rod stopped at a bottommost point; and
when the bottom side of the stretched preform reaches the bottom mold in the first blow molding position, elevating the bottom mold to the second blow molding position to push back and invert the bottom side of the stretched preform, thereby forming the stretched preform according to an inner shape of the body mold and the bottom mold and molding the preform into a predetermined container shape.
